(19) Europäisches Patentamt
European Patent Office
Office européen des brevets

(11) **EP 1 360 431 B1**

(12) **EUROPÄISCHE PATENTSCHRIFT**

(45) Veröffentlichungstag und Bekanntmachung des Hinweises auf die Patenterteilung:
**03.08.2005 Patentblatt 2005/31**

(51) Int Cl.⁷: **F16F 7/12**, A62B 35/04, B60R 22/28, A63B 29/02, D03D 1/00

(21) Anmeldenummer: 02716021.7

(22) Anmeldetag: **04.02.2002**

(86) Internationale Anmeldenummer:
**PCT/CH2002/000058**

(87) Internationale Veröffentlichungsnummer:
**WO 2002/063180 (15.08.2002 Gazette 2002/33)**

(54) **FALLDÄMPFER**

FALL ARRESTER

RALENTISSEUR DE CHUTE

(84) Benannte Vertragsstaaten:
**AT BE CH CY DE DK ES FI FR GB GR IE IT LI LU MC NL PT SE TR**

(30) Priorität: **07.02.2001 CH 217012001**

(43) Veröffentlichungstag der Anmeldung:
**12.11.2003 Patentblatt 2003/46**

(73) Patentinhaber: **Mammut Tec AG**
**5703 Seon (CH)**

(72) Erfinder:
• **HESS, Ruedi**
**CH-5306 Tegerfelden (CH)**
• **MEIER, Reto,**
**ETH-Zentr., Inst. für Textilmaschinen**
**CH-8092 Zürich (CH)**

• **MEYER, Urs,**
**ETH-Zentr., Inst. für Textilmaschinen**
**CH-8092 Zürich (CH)**

(74) Vertreter: **Becker, Konrad, Dr. et al**
**Diltec AG,**
**Technopark Zürich**
**Technoparkstrasse 1**
**8005 Zürich (CH)**

(56) Entgegenhaltungen:
**WO-A-00/44445        WO-A-01/26738**
**DE-A- 2 061 100       FR-A- 2 565 112**
**FR-A- 2 709 970       FR-A- 2 771 464**
**GB-A- 1 294 910       GB-A- 2 111 012**
**US-A- 4 710 423       US-A- 5 910 457**
**US-A- 6 085 802**

EP 1 360 431 B1

**Beschreibung**

Die Erfindung betrifft einen Falldämpfer gemäss Patentanspruch 1.

Bekannte Falldämpfer verwenden für die Aufnahme der entstehenden Stosskräfte bei einem Sturz unterschiedliche Lösungen, nämlich

- ineinandergewebte Gurtbänder, die bei einem Sturz auseinander gerissen werden,
- ein zusammengefaltetes, vernähtes Band, dessen Nahtstellen bei Beanspruchung reissen und so den Sturz abbremsen,
- ein Seil, das bei einem Sturz durch einen Karabinerhaken gezogen wird und mittels der entstehenden Reibung abgebremst wird.

Der Nachteil dieser Lösungsansätze liegt darin, dass sie einen langen Bremsweg benötigen, um die angehängte Masse im Fall zu dämpfen.

So sind Dämpfungssysteme bekannt, die in der Dämpfungszone ein mehrfach zusammengefaltetes Band aufweisen, so etwa nach der US 5,207,363. In dieser Zone sind die Bandränder untereinander zusammengenäht, sodass unter der Fallbelastung die einzelnen Lagen des Bandes nacheinander losgerissen werden, wodurch ein Dämpfungseffekt erzielt wird.

Ein weiterer Falldämpfer mit einem Faserbündel aus einem thermoplastischen Polymer und einer Schutzhülle ist aus der GB 2 111 012 A bekannt.

Die Anforderungen an Falldämpfer sind z.B. in der Europäischen Norm EN 355 (1992) festgelegt. Danach darf bei der Prüfung der dynamischen Leistung mit einer starren Stahlmasse von 100 kg oder einem Prüftorso von 100 kg Masse die Bremskraft $F_{max}$ 6,0 kN und die Auffangstrecke H 5,75 m nicht überschreiten.

Der in dervorliegenden Erfindung vorzuschlagende Falldämpfer erlaubt, eine nach der Europäischen Norm EN 355 (1992) verlangten Masse von 100 kg, auf kürzestem Weg abzubremsen. Um diese Normen zu erfüllen, wird der erfindungsgemässe Falldämpfer mit einem Filamentgarn erstellt, dessen Kraft-Dehnungs-Verhalten den Anforderungen eines optimalen Falldämpfers entspricht.

Es ist die Aufgabe der vorliegenden Erfindung, einen Falldämpfer vorzuschlagen, bei dem die Bremsstrecke auf kürzestem Weg erfolgt und damit die bekannten Nachteile behoben werden. Verschiedene Verwendungen werden aufgezeigt.

Eine weitere Aufgabe besteht in der Beschreibung eines Verfahrens zum Betrieb eines Falldämpfers.

Erfindungsgemäss wird diese Aufgabe mit einem Falldämpfer gemäss dem Wortlaut nach Patentanspruch 1 gelöst.

Die Erfindung wird im Folgenden anhand der Zeichnung näher erläutert. Es zeigen:

Fig. 1        Prinzipieller Aufbau des Falldämpfers
Fig. 2        Schematische Darstellung eines Falldämpfers unter Belastung
Fig. 3        Kraft-Dehnungs-Verhalten eines Filamentgarnes
Fig. 4        Kraft-Dehnungs-Diagramm als Berechnungsgrundlage für ein Falldämpfungselement (idealisiert)
Fig. 5        Kraft-Dehnungs-Diagramm von Polypropylen 948f272
Fig. 6A       Erstes Beispiel eines Falldämpfers mit Filamentgarnschlinge
Fig. 6B       Erstes Beispiel gemäss Fig. 6A unter Belastung
Fig. 7A       Bekannter Falldämpfer mit Verbindungsmittel nach EN 363.
Fig. 7B       Zweites Beispiel eines Falldämpfers ohne weiteres Verbindungsmittel
Fig. 8        Drittes Beispiel eines Falldämpfers mit einer Anzahl Schlingen unterschiedlicher Länge
Fig. 9        Erstes Ausführungsbeispiel eines Falldämpfers mit einer Schutzhülle als tragendem Element
Fig. 10       Zweites Ausführungsbeispiel eines Falldämpfers mit zusätzlicher Garnschlinge zur Erhöhung der Reissfestigkeit
Fig. 11       Drittes Ausführungsbeispiel eines Falldämpfers mit zusammengelegtem Falldämpfungselement

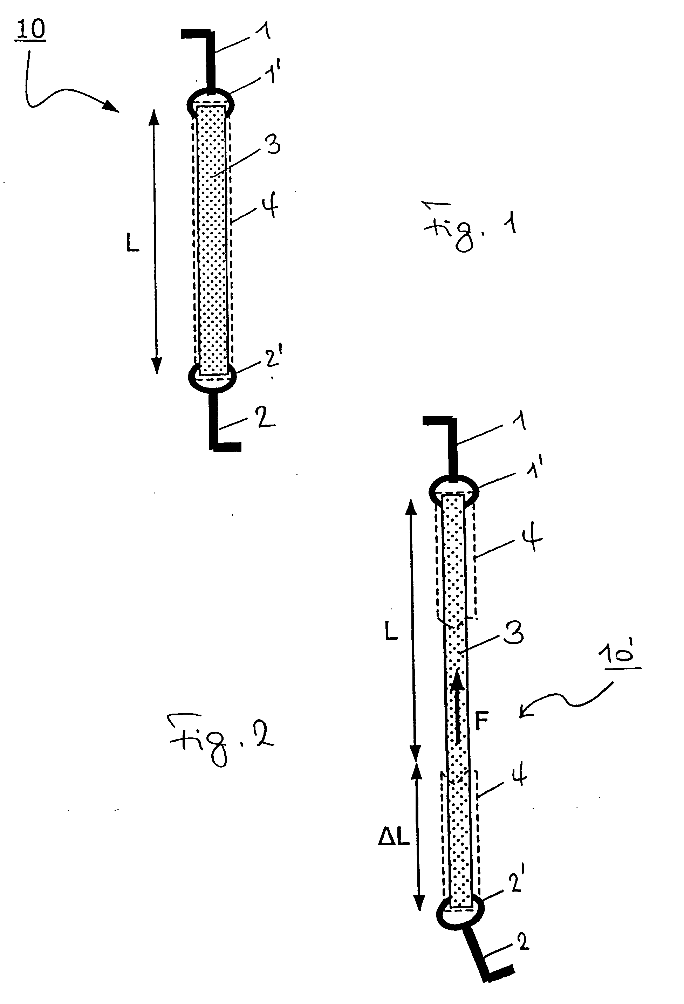

Fig. 1 zeigt den prinzipiellen Aufbau eines Falldämpfers.

Der Falldämpfer 10 weist am einen Ende ein erstes Verbindungselement 1 auf, das für das Anbringen, resp. Aufhängen des Falldämpfers am Anschlagpunkt vorgesehen ist. Das Verbindungselement 1 nimmt im unteren Bereich mit einem Aufnahmemittel 1' ein Falldämpfungselement 3 auf. Am unteren Ende des Falldämpfungselementes 3 befindet sich ein zweites Aufnahmemittel 2', das mit dem Falldämpfungselement 3 verbunden ist. Ein zweites Verbindungselement 2 ist mit dem Aufnahmemittel 2' zusammengeschlossen und ist zur Befestigung des fallenden Körpers vorgesehen. Das Falldämpfungselement 3 mit einer Länge L besteht im allgemeinen aus einer Vielzahl von Fäden eines speziell für den Falldämpfer 10 entwickelten Filamentgarnes.

Zum Schutz des Garnes, bzw. des Falldämpfungselementes 3 vor Scheuern und UV-Strahlen wird es in eine Schutzhülle 4 eingepackt. Die Verwendung einer solchen Hülle ist optional.

Das Falldämpfungselement 3 besteht im allgemeinen aus thermoplastischen Polymeren. Für die Verbindungselemente 1, 2 sind karabinerähnliche Teile aus Kunststoff, Textilien oder Metall vorgesehen. Sie können aus Materialien wie z. B. hochfesten Kunststoffen und Garnen oder Metall-Legierungen hergestellt sein.

Die Aufnahmemittel 1' und 2' dienen zur Befestigung des Falldämpfungselements mit dem Verbindungselement. Sie können im Verbindungsmittel integriert sein oder als separate Elemente am Verbindungsmittel befestigt sein, von denen auch mehrere vorliegen können (z.B. 2 Ringe).

Die Aufnahmemittel 1', 2' dürfen keine scharfen (nur abgerundete) Kanten aufweisen. Sie sind aus Metall, Metall-Legierungen, Kunststoffen oder hochfesten Fasern gefertigt.

Das Filamentgarn hat die Eigenschaft, sich bei einem Sturz in den Falldämpfer auszudehnen und die auftretende Kraft kontinuierlich abzubauen. Die Eigenschaften des Garns werden später beschrieben.

Die optionale Schutzhülle 4 nimmt bei einem Sturz keine oder eine nur minimale Kraft auf, so dass es dem Filamentgarn erlaubt, sich frei auszudehnen.

Mit der Schutzhülle 4 sind praktisch alle Teile des Falldämpfers ganz oder mindestens teilweise umgeben, sodass von aussen nur Teile der beiden Verbindungselemente 1, 2 erkennbar sind. Vorteilhafterweise werden auch mehrere Schutzhüllen verwendet, wobei deren Unterteilung auf die verschiedenen Funktionen des Falldämpfers abgestimmt ist, wie in den Beispielen ausgeführt wird.

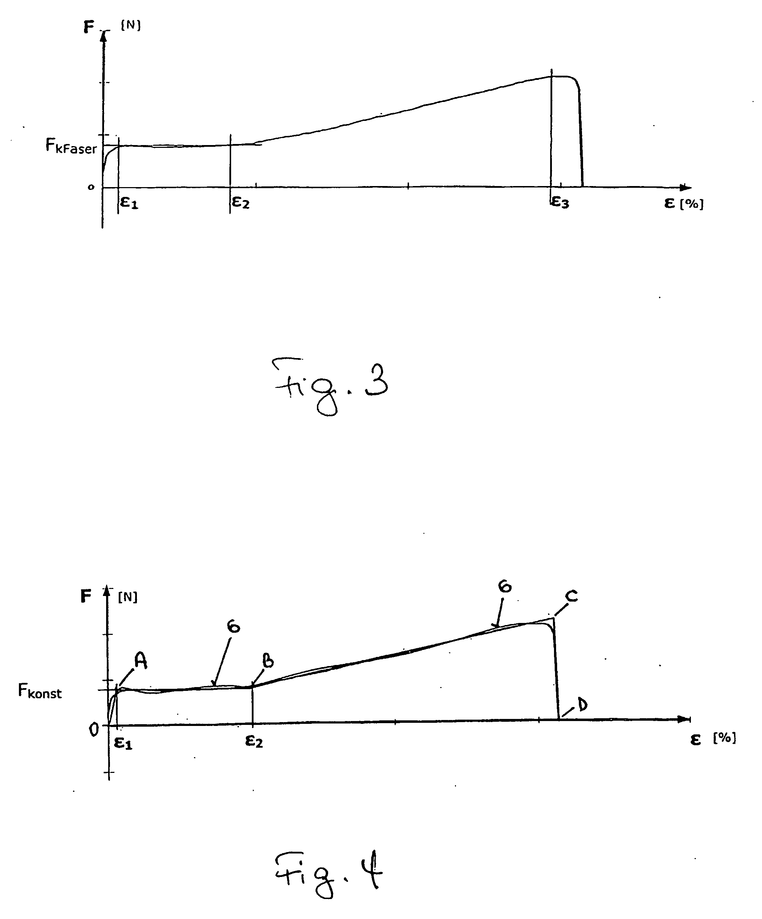

Fig. 2 zeigt eine schematische Darstellung eines Falldämpfers 10' unter Belastung. Die Verbindungselemente 1, 2 und die Aufnahmemittel 1', 2' entsprechen denen der Fig. 1. Die optionale Schutzhülle 4 hat sich geöffnet, damit sich das Filamentgarn 3 ungehindert ausdehnen kann. Die Eigenschaften des Falldämpfundselementes 3, z.B. eines Filamentgarnbündels, sind so ausgelegt, dass die Prüfnorm nach der Europäischen Norm EN 355 (1992) bestmöglichst erfüllt wird. Demnach nimmt das Filamentgarnbündel unter Belastung bis zum vollständigen Stillstand der Prüfmasse (100 kg) eine annähernd konstante Kraft F ($\leq 6,0$ kN) auf. Nach dem Abbremsen der Masse hat sich der Falldämpfer um die Länge $\Delta L$ ausgedehnt und bleibt in diesem Zustand. Der Falldämpfer muss nach einer derartigen Beanspruchung ersetzt werden.

Das Falldämpfungselement 3 kann auf verschiedenste Art ausgebildet sein. Massgebend für dessen Eigenschaften ist das Material, das Dehnverhalten, die Anzahl der Fasern, und die Länge. Gelangt eine Kombination von Schlingen verschiedener Länge als Falldämpfungselement zur Anwendung, so ergeben sich die Eigenschaften des Falldämpfers als Superposition.

Als Materialien für die Filamentgarne sind vorzugsweise Kunststoffe als Fasernbündel, vorgesehen. So eignen sich z. B. Polypropylene mit unterschiedlichem Dehnverhalten besonders gut für die Dämpfung der dynamischen Kräfte.

Das Falldämpfungselement 3 ist als Einzelfaserbündel (lose, parallellaufende Fasern), als eine oder mehrere Schlingen, als gewobenes, gewirktes oder geflochtenes Band oder als gewirktes, geflochtenes, gezwirntes oder gedrehtes Seil ausgebildet.

Das verwendete Material weist unterschiedliche Länge und/oder Dicke auf. so kann das Falldämpfungselement auch als Seilkern vorliegen, der umflochten oder umwoben ist.

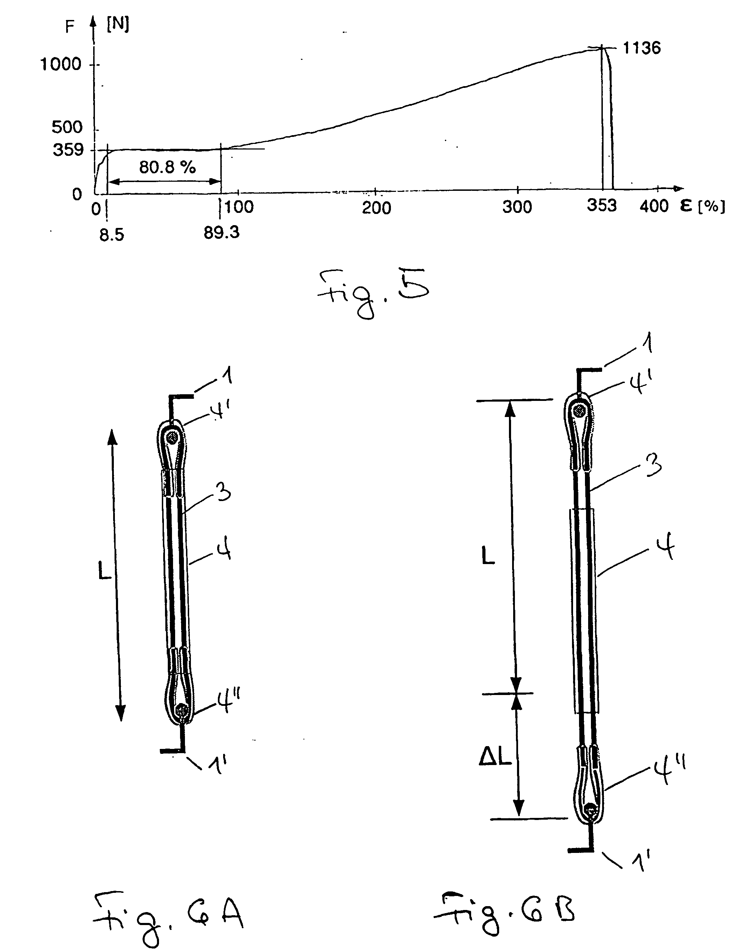

Fig. 3 zeigt ein Kraft-Dehnungs-Verhalten eines Filamentgames.

Als Material für das Falldämpfungselement wird ein nicht oder nur teilweise orientiertes Filamentgarn (LOY, Low oder POY, Partially Oriented Yam) verwendet (Chemie Faser Lexikon, Hans J. Koslowski, Deutscher Fachverlag, 11. Auflage, S. 95 und 137 (1997)).

In einem ersten Dehnungsbereich (0, $\varepsilon_1$) der Kraft-Dehnungs-Kennlinie baut sich die Kraftaufnahme rasch auf. Danach zeichnet sich das Garn in einem zweiten, an den ersten anschliessenden Dehnungsbereich ($\varepsilon_1$, $\varepsilon_2$) durch eine konstante Kraftaufnahme bis zu einem Wert $F_{kFaser}$ über einen möglichst langen Dehnungsbereich aus. Dieser Bereich wird für die gleichmässige Kraftaufnahme des Falldämpfers voll ausgenutzt. Der darauffolgende Anstieg bis zu einem mehrfachen der Kraft bei weiterer Ausdehnung des Garns in einem dritten, an den zweiten anschliessenden Dehnungsbereich ($\varepsilon_2$, $\varepsilon_3$), verhindert ein Zerreissen des Falldämpfers bei hoher Beanspruchung. Damit wird ein schonender Abbau der Fallgeschwindigkeit ohne Schadenfolge für den fallenden Körper gesichert und bei Überlast werden die verbleibenden Kräfte des Fangstosses bis zum Stillstand des fallenden Körpers aufgenommen.

Als Option kann zur zusätzlichen Sicherheitsreserve ein Material, bzw. eine Schlinge mit reissfesterem Garn (z.B. DYNEEMA) mit der minimalen Länge L + $\Delta L$ (Länge des Falldämpfungsetements plus Ausdehnungslänge des Falldämpfers) in den Falldämpfer integriert werden. Dies verhindert ein Zerreissen des Falldämpfers auch bei starker Überbelastung.

Liegen in einem Falldämpfungselement eine Anzahl gleichartiger, lose zusammengefügter Garnfasern, bzw. Garnfäden vor, so ergibt sich durch eine Überlagerung der einzelnen Kraft-Dehnungs-Diagramme ein neues Kraft-Dehnungs-Diagramm, das demjenigen des Falldämpfungselementes zugeordnet werden kann.

Die beschriebenen drei Dehnungsbereiche gelten auch für das Kraft-Dehnungs-Verhalten des Falldämpfungselementes und werden im weiteren auch mit denselben Bezeichnungen dafür verwendet. Selbstverständlich beträgt in diesem Fall der Wert für $F_{kFaser}$ ein Vielfaches desjenigen der Einzelfaser.

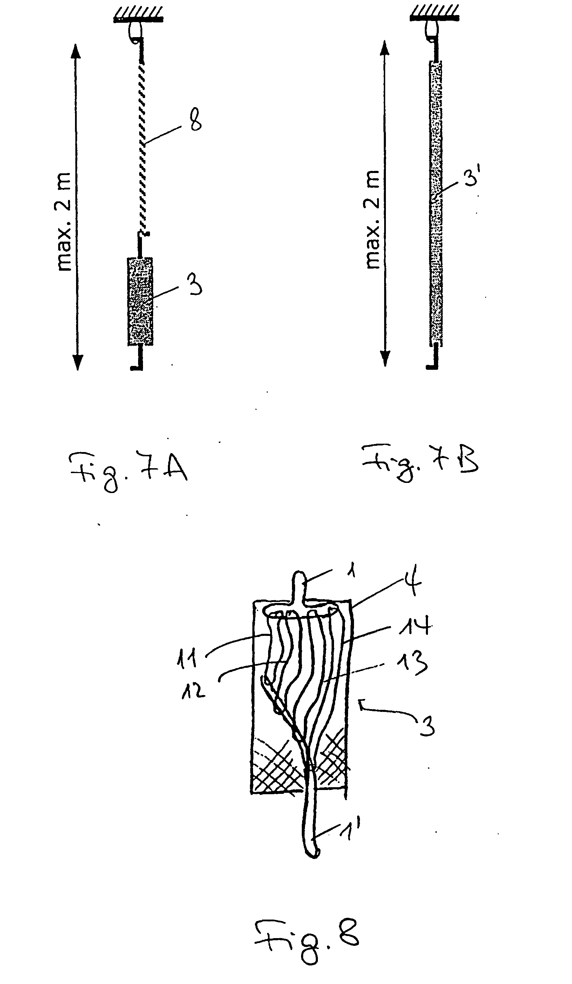

Fig. 4 zeigt ein Kraft-Dehnungs-Diagramm als Berechnungsgrundlage für ein Falldämpfungselement (idealisiert).

Die Anzahl der benötigten Fasern des Filamentgarns zum optimalen Abbremsen der Masse ist je nach Verarbeitungsart (weben, flechten, drehen, etc.) verschieden. Wird das Garn des Falldämpfungselements nicht weiter verarbeitet, d.h. es liegt ein lose zusammengefügtes Faserbündel vor, so kann die Anzahl der Fasern und die Ausdehnungslänge des Falldämpfungselementes anhand der Formeln (I), (II) und (III) wie folgt bestimmt werden:

$$n = F_{konst} / F_{kFaser} \qquad\qquad (I)$$

$$\Delta L = mgh / [(1 - \varepsilon_1/2\varepsilon_2) \cdot n \cdot F_{kFaser} - mg] \qquad\qquad (II)$$

Im weiteren wird die erforderliche Filamentgarnlänge gemäss Formel (III) berechnet:

$$L = \Delta L \cdot 100\% / \varepsilon_2 \qquad\qquad (III)$$

Es bedeuten:

$\Delta L$ [m] = Ausdehnungslänge des Falldämpfers
L [m] = Länge des Filamentgames für das Falldämpfungselement
m [kg] = aufzufangende Masse
g [m/s$^2$] = Erdbeschleunigung
h [m] = Fallhöhe der aufzufangenden Masse
$\varepsilon_1$ [%] = Dehnstrecke in % bis zum konstanten Kraftverlauf (Fig. 4)
$\varepsilon_2$ [%] = Dehnstrecke in % bis zum weiteren Kraftanstieg (Fig. 4)

Die Formeln II und III sind anhand des Kraft-Dehnungs-Diagramms aus der Fig. 4 entstanden. Der Verlauf des wirklichen Kraft-Dehnungs-Diagramms 6 der Fig. 3 wurde zur Vereinfachung der Berechnung durch gerade Linien O-A, A-B, B-C und C-D idealisiert. Die auf dieser Grundlage errechneten Werte sind jedoch auf der sicheren Seite, da der idealisierte Kraftanstieg im Dehnungsbereich $(0, \varepsilon_1)$ flacher verläuft.

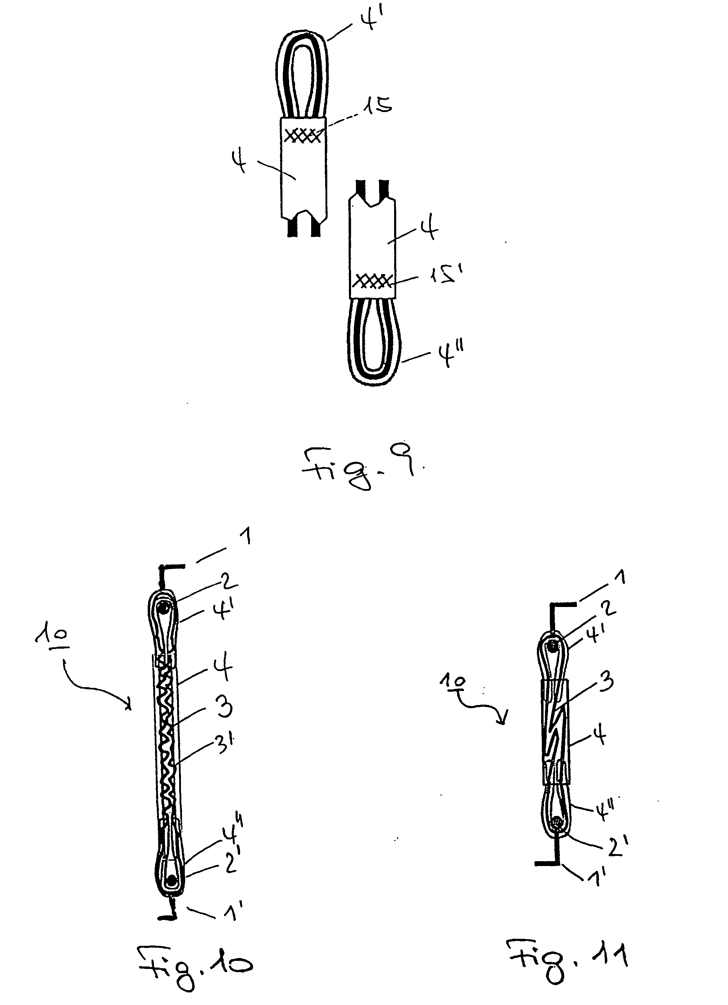

Fig. 5 zeigt ein Kraft-Dehnungs-Diagramm von Polypropylen 948f272, das für das erste Beispiel verwendet wurde.

Das verwendete Polypropylengarn mit dem Titer 948f272 weist die folgenden Kraft-Dehnungs-Eigenschaften auf (Chemie Faser Lexikon, Hans J. Koslowski, Deutscher Fachverlag, 11. Auflage, S. 171-172 (1997)):

Das Filamentgarn baut in den ersten 8.5% des Ausdehnungsweges, bzw. im ersten Dehnungsbereich $(0, \varepsilon_1)$ die konstante Kraft von 3.59 N auf. Diese Kraft bleibt konstant über die weitere Ausdehnung - im zweiten Dehnungsbereich $(\varepsilon_1, \varepsilon_2)$ - von 80.8%, was einer Gesamtdehnung von 89.3% des Garnes entspricht. Danach steigt die Kraft im dritten Dehnungsbereich $(\varepsilon_2, \varepsilon_3)$ auf 11.36 N bei 353% Ausdehnung. Der konstante Kraftverlauf wird für das Falldämpfungselement genutzt, der darauffolgende Kraftanstieg dient als Sicherheitsreserve bei einer allfälligen Überbelastung des Falldämpfers.

Fig. 6A und 6B zeigen ein erstes Beispiel eines Falldämpfers mit einer Filamentgarnschlinge unbelastet, bzw. unter Belastung.

Das Falldämpfungselement 3 besteht aus einer Garnschlinge von Polypropylen 948f272 mit 836 Umschlingungen mit einem Schlingenumfang von 1.856 m, bzw. L = 0.928 m.

Eine obere und eine untere Schutzhülle 4', 4" dient zum Schutz des Filamentgams gegen Scheuern an den Verbindungspunkten zum oberen und unteren Karabinerhaken 1,1'. Die Schutzhüllen 4', 4" bestehen aus einem Duplix 1t Schlauch (Fa. Mammut Tec AG, CH-5703 Seon). Sie werden lose in eine mittlere Schutzhülle 4 eingeschoben, damit sich bei einem Sturz in den Falldämpferdie Filamentgarnschlinge frei ausdehnen kann (Fig. 6B). Die mittlere Schutzhülle 4 besteht aus dem gleichen Material wie die Schutzhüllen 4', 4"; dies ist aber nicht zwingend. Die Karabinerhaken 1, 1' sind aus einer Alu-Legierung hergestellt.

Die Berechnung des Falldämpfungselements 3 wurde mit den Formeln (I) - (III) durchgeführt und ergab:

Aus Formel (I):    n = 1672 Fasern mit einem Titer von 948f272
Aus Formel (II):    $\Delta L = 0.829$ m

Aus Formel (III):    L = 0.928 m

Um die Prüfnorm für Falldämpfer nach der Europäischen Norm EN 355 (1992) zu erfüllen, nämlich eine Masse von 100 kg aus 4 m Höhe mit max. 6000 N abzubremsen, muss das hier spezifizierte Falldämpfungselement mit einem Bündel von 1672 Fasern des Typs PP 948f272 erstellt werden. Die erforderliche Faserlänge beträgt 0.928 m. Mit diesem Falldämpfungselement wird die Masse innerhalb einer Strecke von 0.829 m abgebremst.

Diese Berechnung gilt nur für lose aneinandergefügten Filamentgarnfasern oder Schlingen. Wird das Garn gewoben, geflochten oder gedreht etc., muss die Anzahl Fasern und die notwendige Länge des Falldämpfungselements auf andere Weise berechnet werden.

Fig. 7A zeigt einen bekannten Falldämpfer mit Verbindungsmittel nach EN 363.

Falldämpfer für die persönliche Schutzausrüstung (PSA) gegen Absturz werden in Auffangsystemen entsprechend der Deutschen Industrie Norm (DIN) EN 363 verwendet. Der Falldämpfer 3 (Europäische Norm EN 355) wird auf der einen Seite mit einem Auffanggurt (Europäische Norm EN 361) verbunden, auf der andern Seite ist er an einem Verbindungsmittel bzw. -seil 8 (Europäische Norm EN 354) angehängt, das an einer fixen Position befestigt ist. Die Länge des Falldämpfers inklusive Verbindungsmittel darf 2 m nicht überschreiten.

Fig. 7B zeigt ein zweites Beispiel eines Falldämpfers ohne weiteres Verbindungsmittel.

Die zwei Elemente Verbindungsmittel bzw. -seil (EN 354) und Falldämpfer (EN 355) in einem Element, zum Falldämpfungselement 3', vereint.

Für das Filamentgarn des Falldämpfers reicht bei dieser Variante ein konstanter Kraftverlauf über eine Dehnung von ca. 50%. Damit wird ein Falldämpfer mit der Länge von ca. 1.50 m Länge benötigt, um einen Körper von 100 kg aus 4 m Höhe abzubremsen. Dieser Falldämpfer wird nun nicht mehr an einem Verbindungsmittel angehängt, sondern direkt an einer fixen Position, bzw. am Anschlagpunkt befestigt.

Fig. 8 zeigt ein drittes Beispiel eines Falldämpfers mit einer Anzahl Schlingen unterschiedlicher Länge.

Erkennbar sind die Verbindungselemente 1, 1' und die Schutzhülle 4. Das Falldämpfungselement 3 ist hier durch vier Garnschlingen 11 - 14 ausgebildet, die eine leicht steigende Länge aufweisen. Während jede einzelne dieser Garnschlingen ein Kraft-Dehnungs-Verhalten gemäss Fig. 3 aufweist, zeigt das Kraft-Dehnungs-Verhalten des Falldämpfungselementes 3 einen 'treppenartigen' Verlauf des zweiten Dehnungsbereiches, der ja der im wesentlichen konstanten Kraftaufnahme dient.

Die Garnschlingen werden im Belastungsfall der Reihe nach gedehnt, ohne jedoch zu reissen.

Fig. 9 zeigt ein erstes Ausführungsbeispiel eines erfindungsgemässen Falldämpfers mit einer Schutzhülle als tragendem Element in einer Teilansicht.

Damit beim Falldämpfer bei einer Vorbelastung von 2,0 kN keine bleibende Verfängerung auftritt (Prüfnorm für statische Vorbelastung, EN 355), wird die mittlere Schutzhülle 4 mit der oberen und unteren Schutzhülle 4', 4" mittels der Nähte 15, 15' vernäht. Die Naht ist so auszulegen, dass sie bis zu einer statischen Belastung von 2,0 kN nicht zerreisst, bei einem dynamischen Fangstoss jedoch unterhalb einer Kraft von 6,0 kN nachgibt. bzw. reisst.

Als obere und untere Schutzhülle kann z.B. ein Schlauch des Typs Duplix 2t (Fa. Mammut Tec AG) verwendet werden. Für die mittlere Schutzhülle wird z.B. ein Schlauch des Typs Duplix 3t (Fa. Mammut Tec AG) verwendet. Die Naht besteht aus Polyestergarn. Der übrige Aufbau des Falldämpfers entspricht Fig. 1.

Die Schutzhüllen sind gegenseitig aufeinander geschoben und vernäht, wodurch der Schutzhülle, bzw. den Schutzhüllen, eine mindestens teilweise tragende Funktion zu kommt. Unter dynamischer Belastung führt dies zur Trennung der Schutzhüllen, während im statischen Fall die Kräfte von den Schutzhüllen aufgenommen werden, ohne dass es zu einer Trennung kommt.

Bei einem Sturz in den Falldämpfer wird die obere und/oder untere Schutzhülle 4' und 4" aus der mittleren Schutzhülle 4 herausgerissen. Das zusammengelegte Filamentgarnbündel 3 wird aus der Schutzhülle 4 herausgezogen und entfaltet sich bis zur vollen Länge. Danach beginnt der Falldämpfer den Auffangstoss kontinuierlich abzubauen. Die Schutzhüllen können auch aus elastischen oder teilelastischen Materialien gefertigt werden. Damit werden die Schutzhüllen zu einem tragenden Element, was dieses Beispiel auszeichnet.

Fig. 10 zeigt ein zweites Ausführungsbeispiel eines Falldämpfers mit zusätzlicher Garnschlinge zur Erhöhung der Reissfestigkeit.

Zur zusätzlichen Sicherheit gegen ein Durchreissen des Falldämpfers wird ein zweites Garn 3' mit höherer Reissfestigkeit in das Falldämpfungselement 3 integriert. Als Beispiel kann ein DYNEEMA-Garn oder eine KEVLAR-Faser, bzw. eine P-Aramidfaser (Chemie Faser Lexikon, Hans J. Koslowski, Deutscher Fachverlag, 11. Auflage, S. 88 (1997)) verwendet werden. 70 Fäden bzw. 35 Umwindungen mit diesem Garn reissen erst bei einer Kraft von ca. 25 kN. Damit das kontinuierliche Abbremsen des Körpers durch die Filamentgarnschlinge 3 nicht von den zusätzlichen Schlingen 3' vor dem kompletten Stoppen des Körpers gehindert wird, braucht die festere Garnschlinge 3' folgende minimale Länge: L(Gmin) = L + $\Delta$L (= Länge des Falldämpfungselements + Ausdehnungslänge des Falldämpfers).

Der Anteil des gewählten hochfesten Fasermaterials kann bis zu 50% betragen. Im weiteren gelangen vorzugsweise Polyamid, Polyester und p-Aramid zur Anwendung, wobei diese Materialien insbesondere eine unterschiedliche Bruchdehnung aufweisen.

Fig. 11 zeigt ein drittes Ausführungsbeispiel eines Falldämpfers mit zusammengelegtem Falldämpfungselement.

Damit die Länge des Falldämpfers 10 nicht der benötigten Länge des Rlamentgarnes zum optimalen Abbremsen eines Körpers entsprechen muss, kann das Falldämpfungselement 3 innerhalb der Schutzhülle 4 zusammengelegt werden. Dadurch wird eine vorteilhafte Verkürzung und ein kompaktes Paket des Falldämpfungselements erreicht. Erkennbar sind - wie bereits beschrieben - die Karabinerhaken 1, 1' als Verbindungselemente, die Aufnahmemittel 2, 2', die obere und untere Schutzhülle 4', 4" und die mittlere Schutzhülle 4.

Im Folgenden wird ein Verfahren zum Betrieb eines Falldämpfers mit Bezug auf die Fig. 3 beschrieben. Im normalen Belastungsfall werden vom Falldämpfungselement 3 im ersten und zweiten Dehnungsbereich $(0, \varepsilon_1; \varepsilon_1, \varepsilon_2)$ der Fangstoss im wesentlichen aufgenommen. 'Normal' heisst, dass die Belastung den spezifizierten Werten relevanter Normen entspricht. Im Überlastfall werden im dritten Dehnungsbereich $(\varepsilon_2, \varepsilon_3)$ die allenfalls noch verbleibenden Kräfte des Fangstosses bis zum Stillstand des fallenden Körpers aufgenommen, bzw. abgebremst. 'Überlastfall' heisst, dass die Belastung oberhalb der spezifizierten Werte relevanter Normen liegt. Im extremen Überlastfall nach dem dritten Dehnungsbereich $(\varepsilon_2, \varepsilon_3)$ werden die verbleibenden Kräfte bis zum Stillstand durch den Anteil des zusätzlichen, bzw. beigemischten, hochfesten Fasermaterials aufgenommen. 'Extremer Überlastfall' heisst, dass es sich hier um eine extreme Belastung weit ausserhalb der Normen handelt, für die noch eine Sicherheitsreserve vorgesehen ist.

Liegt nun ein Falldämpfungselement mit elastischen oder mindestens teilelastische Eigenschaften vor, so wird im Belastungsfall das Falldämpfungselement nach der durch die Belastung verursachte Dehnung ganz oder teilweise zurückverformt.

Verwendungen derartiger Falldämpfer finden sich als Sicherheitsgurt in Fahrzeugen, indem die Aufprallkraft eines menschlichen Körpers mittels einer mit dem Falldämpfer verbundenen Gurte, Band oder einem anderen Rückhalteelement zur Dämpfung vorgesehen ist.

Ein Falldämpfungselement der beschriebenen Art fängt beispielsweise bei einem Gurtrückhaltesystem in Fahrzeugen die nach vorne prallende Körpermasse mit einer vordefinierten Kraft auf. Damit eignet es sich zur Dämpfung der Aufprallkräfte auf einen Sicherheitsgurt oder einen Airbag.

Weitere Verwendungen in Verbindung mit Sicherheitsgurten liegen bei Flugzeugen, Hochleistungsbahnen, Bus und Motorrad, sowie in Verbindung mit Notrückhaltesystemen; ebenfalls als zusätzliche Dämpfungselemente der Fallkraft bei Fangnetzen, sowie im Bergsport in Verbindung mit dem Seil als zusätzliches Dämpfungselement für das Sport- und Eisklettern.

Zur Dämpfung von Kräften dient, die schockartig auftreten, wie dies beim Sport- und Eisklettern der Fall ist, wird nur ein kurzer Teil des Dehnungsweges, bzw. des Dehnungselementes, benötigt. Das Falldämpfungselement kann somit zur mehrmaligen, kurzzeitigen Beanspruchung vorgesehen werden.

## Patentansprüche

1. Falldämpfer zur Dämpfung eines fallenden oder aufprallenden Körpers, der am einen Ende ein erstes Verbindungselement (1) für das Anbringen des Falldämpfers (10) am Anschlagpunkt aufweist, wobei das erste Verbindungselement (1) ein erstes Aufnahmemittel (1') aufweist, an dem ein Falldämpfungselement (3) aus einem Faserbündel eines thermoplastischen Polymers befestigt ist, und am anderen Ende des Falldämpfers (10) ein zweites Verbindungselement (2) mit einem zweiten Aufnahmemittel (2') vorgesehen ist, an dem ebenfalls das Falldämpfungselement (3) befestigt ist, wobei das zweite Verbindungselement (2) für das Anbringen des Körpers vorgesehen ist, **dadurch gekennzeichnet, dass** das Falldämpfungselement (3) von 3 Schutzhüllen (4, 4', 4") umgeben ist und die mittlere Schutzhülle (4) mit der oberen und der unteren Schutzhülle (4', 4") vernäht ist und dass mindestens eine der Nähte (15, 15') bei einer Belastung von mindestens 2,0 kN und maximal 6,0 kN reisst.

2. Falldämpfer nach Anspruch 1, **dadurch gekennzeichnet, dass** das Faserbündel eine Dehnung aufweist, die im belasteten Zustand durch den Zusammenhang gemäss den Formeln (I), (II) und (III)

$$n = F_{konst} / F_{kFaser} \tag{I}$$

$$\Delta L = mgh / [(1 - \varepsilon_1/2\varepsilon_2) \cdot n \cdot F_{kFaser} - mg] \tag{II}$$

$$L_0 = \Delta L \cdot 100\% / \varepsilon_2 \qquad\qquad (III)$$

gegeben ist, worin bedeuten:

$\Delta L$ [m] =        Längenänderung des Falldämpfungselementes
$L_0$ [m] =        Länge des Filamentgames, bzw. Länge des Falldämpfungselementes im unbelasteten Zustand
m [kg] =        aufzufangende Masse
g [m/s$^2$] =        Erdbeschleunigung
h [m] =        Fallhöhe der aufzufangenden Masse
$\varepsilon_1$ [%] =        Dehnstrecke in % bis zum konstanten Kraftverlauf
$\varepsilon_2$ [%] =        Dehnstrecke in % bis zum weiteren Kraftanstieg

**3.** Falldämpfer nach Anspruch 1 oder 2, **dadurch gekennzeichnet, dass** das thermoplastische Polymer aus einem monofilen Polyester oder Polyamid besteht, das elastische oder mindestens teilelastische Eigenschaften aufweist.

**4.** Falldämpfer nach Anspruch 1 oder 2, **dadurch gekennzeichnet, dass** das thermoplastische Polymer aus einem Filamentgarnbündel mit einem Anteil von bis zu 50% eines hochfesten Fasernmaterials, vorzugsweise eines Polyesters oder eines Polyamids, besteht.

**5.** Falldämpfer nach einem der Ansprüche 1 - 4, **dadurch gekennzeichnet, dass** das Falldämpfungselement (3) auf eine vorgegebene Länge durch ein hochfestes Material, vorzugsweise metallisch oder hochfeste Fasern, in der vorgewählten Dehnungslänge begrenzt vorliegt.

**Claims**

**1.** Damping mechanism for damping a falling or colliding element which on one end has a first connection element (1) for the affixing of a damping mechanism (10) at the point of collision, the first connection element (1) being fitted with a first fastening means (1') to which a damping mechanism (3) consisting of a fiber bundle of a thermoplastic polymer is fastened and on the other end of the damping element (10) a second connection element (2) with a second fastening means (2') is fitted to which the damping mechanism (3) is also fastened, the second connection element (2) being intended for the affixing of the element, wherein the damping mechanism (3) is enclosed by 3 protective sleeves (4, 4', 4") and the middle protective sleeve (4) is sewn together with the upper and the lower protective sleeve (4', 4") and that at least one of the seams (15, 15') will tear at a strain of a minimum of 2.0 kN and a maximum of 6.0 kN.

**2.** Damping mechanism as claimed in claim 1, wherein the fiber bundle exhibits an expansion which in the strained condition is given by the expression according to formulas (I), (II) and (III)

$$n = F_{konsl} / F_{kFaser} \qquad\qquad (I)$$

$$\Delta L = mgh \, /[(1 - \varepsilon_1/2\varepsilon_2) \cdot n \cdot F_{kFaser} - mg] \qquad\qquad (II)$$

$$L_0 = \Delta L - 100\% / \varepsilon_2 \qquad\qquad (III)$$

the following meanings being defined:

$\Delta L$ [m] =        Change in length of the damping mechanism
$L_0$ [m] =        Length of filament strand or length of damping mechanism in the unloaded condition
m [kg] =        Mass to be intercepted
g [m/s$^2$] =        Gravitational acceleration
h [m] =        Height of fall of mass to be intercepted
$\varepsilon_1$ [%] =        Expansion range in % up to the constant force slope

$\varepsilon_2$ [%] =       Expansion range in % up to a further increase of force

3. Damping mechanism as claimed in claim 1 or 2, wherein the thermoplastic polymer consists of a monofil polyester or polyamide which exhibits elastic or at least semi-elastic properties.

4. Damping mechanism as claimed in claim 1 or 2, wherein the thermoplastic polymer consists of a filament yarn bundle with a ratio of a high-strength fiber material of up to 50%, preferably of polyester or polyamide.

5. Damping element as claimed in any one of claims 1 - 4, wherein the damping mechanism (3) is present in the preselected expansion length in a limited scope over a pre-determined length by virtue of a high-strength material, preferably metal or high-strength fibers.


**Revendications**

1. Amortisseur de chute destiné à amortir la chute ou le choc d'un corps, lequel présente à l'extrémité un premier élément de liaison (1) pour la fixation de l'amortisseur de chute (10) au point de fixation, le premier élément de liaison (1) présentant un premier moyen de suspension (1') auquel est fixé un élément d'amortissement de chute (3) se constituant d'un faisceau de fibres d'un polymère thermoplastique, et à l'autre extrémité de l'amortisseur de chute (10) un second élément de liaison (2) avec un second moyen de suspension (2') auquel est également fixé l'élément d'amortissement de chute (3), le second élément de liaison (2) étant prévu pour la fixation du corps, **caractérisé en ce que** l'élément d'amortissement de chute (3) est habillé de 3 gaines de protection (4, 4', 4") et la gaine de protection centrale (4) est cousue avec la gaine de protection inférieure et supérieure (4', 4") et qu'au moins une des coutures (15, 15') craque sous une charge minimale de 2,0 kN et maximale de 6,0 kN.

2. Amortisseur de chute selon la revendication 1, **caractérisé en ce que** le faisceau de fibres présente une extension calculée sous charge selon les formules (I), (II) et (III):

$$n = F_{const} / F_{kfibre} \tag{I}$$

$$\Delta L = mgh / [(1 - \varepsilon_1/2\varepsilon_2) \cdot n \cdot F_{kfibre} - mg] \tag{II}$$

$$L_0 = \Delta L - 100\% / \varepsilon_2 \tag{III}$$

Explication:

$\Delta L$ [m] =       Variation de la longueur de l'élément d'amortissement de chute
$L_0$ [m] =       Longueur du fil continu ou longueur de l'élément d'amortissement de chute sans charge
m [kg] =       Masse tombante
g [m/s$^2$] =       Accélération due à la gravité
h [m] =       Hauteur de chute de la masse tombante
$\varepsilon_1$ [%] =       Extension en % jusqu'à la courbe constante de la force
$\varepsilon_2$ [%] =       Extension en % jusqu'à la prochaine augmentation de la force

3. Amortisseur de chute selon la revendication 1 ou 2, **caractérisé en ce que** le polymère thermostatique est composé d'un polyester ou polyamide monofil qui présente des propriétés élastiques ou au moins semi-élastiques.

4. Amortisseur de chute selon la revendication 1 ou 2, **caractérisé en ce que** le polymère thermostatique est composé d'un faisceau de fils continus constitué à 50 % maximum d'un matériau fibreux à haute résistance, de préférence d'un polyester ou d'un polyamide.

5. Amortisseur de chute selon une des revendications 1 à 4, **caractérisé en ce que** l'élément d'amortissement de chute (3) se présente sur une longueur prédéfinie limité par un matériau à haute résistance, de préférence métallique ou des fibres à haute résistance, dans la longueur d'extension présélectionnée.

Fig. 1

Fig. 2

Fig. 3

Fig. 4

fig. 5

fig. 6A

fig. 6B

Fig. 7A

Fig. 7B

Fig. 8

fig. 9.

Fig. 10

Fig. 11